# EUROPEAN PATENT SPECIFICATION

(11) **EP 4 159 484 B1**
(45) Date of publication and mention of the grant of the patent: **25.09.2024**
(21) Application number: 22198018.8
(22) Date of filing: 27.09.2022
(51) Int. Cl.: B60C 11/12

(54) **PNEUMATIC TIRE WITH THREE-DIMENSIONAL SIPE**
LUFTREIFEN MIT DREIDIMENSIONALER LAMELLE
PNEU AVEC LAMELLE TRIDIMENSIONNELLE

(30) Priority: 29.09.2021 IN 202121044271
(43) Date of publication of application: 05.04.2023
(73) Proprietor: CEAT LIMITED, 400 030 Mumbai (IN)
(72) Inventor: DHOLIYA, Prashant, 389 350 Chandrapura, Halol (IN); YADAV, Anurag, 389 350 Chandrapura, Halol (IN)
(74) Representative: Studio Torta S.p.A.

(56) References cited:
- JP-A- 2007 055 285
- US-A1- 2002 134 202
- US-A1- 2008 295 937
- US-A1- 2010 006 198
- US-A1- 2012 168 049
- US-A1- 2015 251 499
- US-A1- 2015 321 520

## Description

### TECHNICAL FIELD

The present invention relates to a pneumatic tire, and specifically to a pneumatic tire with a three-dimensional sipe having connecting portions.

### BACKGROUND

Tires are essential part of a vehicles for enabling movement of vehicle on different road surfaces. Tire is a circular and ring-like part of the vehicle which comes in direct contact with ground. The tires may be responsible for a plurality of functions, such as transfers weight of the vehicle, braking, to maintain steering, absorbing shock from the road surface, etc. In view of above stated function, tire design is essential for ensuring safe driving on different types of road surface conditions, such wet, dry and snowy.

In general, tires have a toroidal structure with an outer surface containing plurality of treads protruding from it. The treads are the main part of the tire which comes in direct contact with the road. The treads further contain tiny cuts along their surface called sipes which reduce slippering of vehicle in wet conditions by pumping water out from under the tire.

US20100006198A1 discloses a pneumatic tire that includes plural blocks formed by plural grooves (circumferential grooves and lateral grooves) extending in a tire circumferential direction and in a tire width direction on a tread surface. The tire also has sipes narrower than the grooves, with each block containing sipes. Additionally, the tire has plural projections provided in the middle region (M) of each sipe, on one sidewall surface of the sipe, and having different projecting directions towards the other sidewall surface of the sipe.

JP2007055285A discloses a pneumatic tire furnished with a three dimensional type sipe on each of blocks constituting a block pattern formed on a tread part has a plurality of first projections provided on a plurality of first portions elongated in the same direction out of each of the portions of one side wall surface of the sipe and a plurality of second projections provided on a plurality of second portions elongated in the same direction out of each of the portions of the one side wall surface of the sipe, and the elongation direction of the first portions and the elongation direction of the second portions are different from each other.

Other known pneumatic tires known in the art are disclosed by publications US2002/134202 A1, US2015251499 A1, US20015/321520 A1, US2010/006198 A1 or JP2007055285 A.

### BREIF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components.
FIG. 1 illustrates schematics of tire with a three-dimensional sipe, in accordance with an implementation of the invention as claimed.
FIG. 2 illustrates schematic of a three-dimensional sipe, in accordance with an implementation of the invention as claimed.
FIG. 3 illustrates dimensions of connecting portions in a three-dimensional sipe, in accordance with an implementation of the invention as claimed.

Throughout the drawings, identical reference numbers designate similar, but not necessarily identical elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION

As described previously, vehicle tires have a tread pattern which extends circumferentially about the outer surface of the tire. The tread pattern is designed in such a manner that the plurality of tread blocks are formed, and these are spaced apart from each other by defining circumferentially and laterally extending grooves. These tread blocks provide the necessary grip or traction for driving, braking and cornering, and the tread block compound is specially formulated to provide a balance between wear, traction, handling and rolling resistance. The groove between the adjacent tread blocks provide free passage for expelling water backwards to provide better traction on wet surfaces and overcome adverse road phenomenon, such as hydroplaning. The pneumatic tire further includes a sipe along the circumferential outer surface. The sipe may be considered as thin slits molded into smooth tread block surface to improve traction of the tire in wet, snowy or icy road conditions. Such sipe essentially subdivide tread blocks into smaller elements to provide additional biting edges for foul-weather traction. Sipes also reduces the heat and its effects on tires by allowing it to cool when the air passes between these siping slices once they have opened after driving on them. Sipes also assist in channeling water away from underneath the tire, which helps build resistance to hydroplaning.

The sipes are formed in such a manner that these sipes may cut a single tread block in multiple portions. These sipes extend radially inward from top of the tread block to the bottom surface of the tread block up to a certain depth as compared to the height of the tread blocks. Improper location and design of sipes formed on the surface of the tread block may negatively affect the stiffness of the tread blocks. As may be understood, tread block stiffness plays an important role in proper functioning of tires in different road conditions. In an example, for increasing pattern stiffness of tire, there are several parameters are defined which may be varied to have a direct impact on the tread block stiffness. For example, tread width, block size, groove orientation, groove size, and many more may be varied to have a direct impact on the stiffness of the tire. However, on varying above mentioned parameters for optimizing pattern stiffness may negatively affect other tire performance parameters. For example, by increasing TW, the stiffness of the tread block increases but at the same time it may negatively impact on rolling resistance of the tire. So, to improve tread stiffness we may need to work on design of the sipes formed on surface of the tread such that instead of decreasing stiffness they may increase stiffness.

Conventionally, 2D sipes are available which may be used on tread block for enhancing wet traction of the tire. Such 2D sipes simply forms a cut along the surface of the tread block which helps in pumping out the water underneath the tire. However, conventional 2D sipe configuration had resulted in improving certain tire performance parameter but at the same time results in deterioration of other performance parameter. Therefore, considering above raised problems, there is a need for a 3D sipe configuration which increases connecting surface between the side walls of the sipe to enhance the stiffness of the tread block and still maintain other performance parameter in safety limit.

A pneumatic tire with a three-dimensional (3D) sipe for tread pattern, is described herein. A pneumatic tire as proposed in claim 1 is provided with a sipe configuration, which enhances performance parameters of the pneumatic tire. As may be understood, sipes are used to increase the stiffness to the adjacent tread blocks while rotating on a wet as well as on a dry road surface. The sipe, as described in the invention as claimed, may not only increase the wet performance and wear appearance of the pneumatic tire, but may also increase the stiffness of the tread block and also reduce breaking distance of the vehicle. Further, the sipe as disclosed in invention as claimed provides an interlocking feature between tread block pieces, which increases the tread pattern stiffness and the same time does not affect negatively other tire performances, i.e., tangential force, lateral force handling capability and principal stress and strain experience.

In one example, a pneumatic tire having toroidal shape with an outer surface includes plurality of tread block protruded and extended orthogonally from the outer surface of the pneumatic tire. The tread blocks are the component which make direct contact with the road surface and these are extruded on outer surface to impart wear resistance and traction to the tire. The material used for compounding tread block is such selected that it has long wear characteristics and good traction capability.

Continuing with the present example, the tread pattern on the outer surface of pneumatic tire is such that the plurality of tread blocks are spaced apart from each other to form a circumferentially and laterally extending grooves between the adjacent tread blocks amongst the plurality of tread blocks. Each tread block includes a sipe formed across the surface of the tread block. The sipe may be considered as thin slits molded into smooth tread block surface to improve traction of the tire in wet, snowy or icy road conditions. The sipe extends radially inward into the tread block up to a certain depth. Such sipe essentially subdivide tread blocks into smaller elements to provide additional biting edges for foul-weather traction. Sipes also reduces the heat and its effects on tires by allowing it cool when the air passes between these siping slices once they have opened after driving on them. Sipes also assist in channeling water away from underneath the tire, which helps build resistance to hydroplaning.

In an example, the sipe formed on the surface of the tread block may include a pair of walls facing each other. Both the walls have a periodically repeating corners and depressions extending along the lateral extension of the sipe. Such periodically repeating corners and depressions may also form a plurality of tapered sides of variant angles extending along the lateral extension of the sipe. In an example implementation, the pair of walls are arranged in such a manner that the corner of one wall may face corresponding depression of the other wall and these pair of walls are separated from each other by a distance to form a groove of certain width in between the walls.

The sipe further includes a sinusoidal connecting portion extending laterally along the length of the walls. For example, like sinusoidal wave has a positive and a negative peak upon its axis of extension, the sinusoidal connecting portion also include positive and negative peaks extending in the direction of length of the sipe. In an example, the sinusoidal connecting portion also extends along the width of the sipe. The sipe further includes a plurality of semicircular connecting portions. The semicircular connecting portions are positioned periodically above and below the sinusoidal connecting portion on adjacent tapered sides of the walls. In an example configuration, the semicircular connecting portions include an open end and a closed end. In one example, the semicircular connecting portion positioned on adjacent tapered sides are oppositely oriented, i.e., one has open end facing above and other has open end facing down, based on the type of peak of the sinusoidal connecting portion. In an example, both connecting portions, i.e., sinusoidal connecting portion and semicircular connecting portion makes a close contact with both walls by extending through the width of the sipe.

Thus, the invention as claimed provides enhanced wet condition performance and increased stiffness. The sipe configuration disclosed by the invention as claimed has a sinusoidal and a semicircular connecting portion, such that it increases the rate of flow of water through it for pumping water beneath the tire and also increases the tangential and lateral stiffness of the tire. Further, it improves maximum tangential forces and lateral forces for improving braking and cornering performance of the tire, respectively. Further, the sipe as disclosed by the invention as claimed, also improves wear appearance, shear stress and unidirectional bending of the tire.

These and other advantages of the invention as claimed would be described in greater detail in conjunction with the following figures, without limiting the scope of the invention. While configuration of the tie bar of the pneumatic tire may be implemented in any number of different configurations.

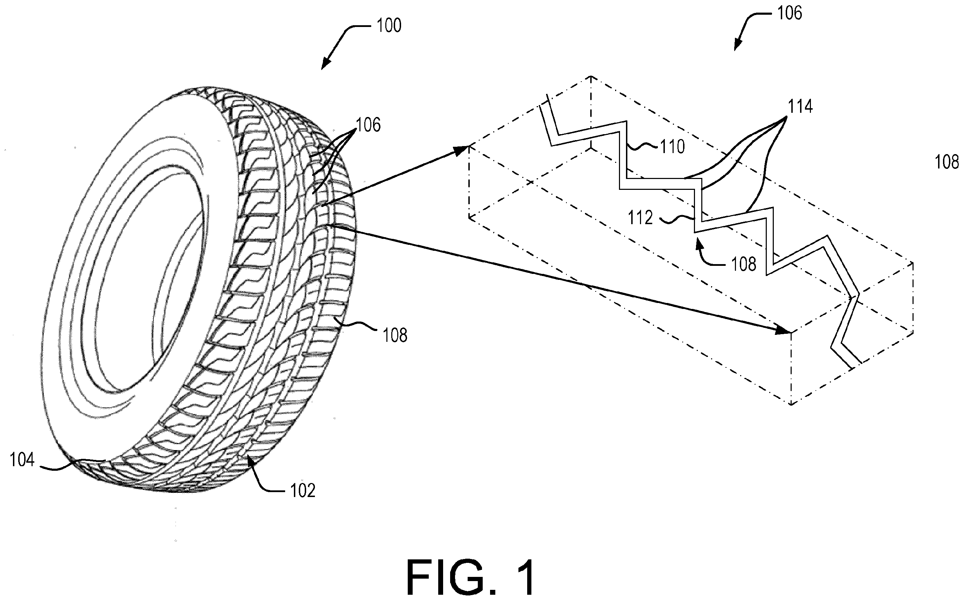

Fig. 1 illustrates schematics of a pneumatic tire 100 with a tread portion 102 for vehicles, such as utility vehicles (UVR), crossover utility vehicles (CUV), passenger buses, motor-bicycles, heavy equipment automobiles, aircrafts etc., in accordance with an implementation of the invention as claimed. The pneumatic tire 100 may further include a pair of shoulder portions 104 with the tread portion 102 placed between the pair of shoulder portions 104. In an example, the tread portion 102 may be represented as a ring-shaped portion, located between the pair of shoulder portion 104. In another example, the tread portion 102 may be considered as a circumferential outer surface of the pneumatic tire 100. The circumferential outer surface may include the tread portion 102 which contacts directly with the surface of the road during rotation. Further, the shoulder portions 104 join the circumferential outer surface to the rim of the pneumatic tire 100. The tread portion 102 as shown in FIG. 1 may be designed as per any possible pattern, without deviating from the scope of the invention, such that the designed pattern reliably provides wear resistance and traction with the road surface.

As may be understood, the tread portion 102 on the circumferential outer surface includes a plurality of tread blocks 106-1, 2, 3, ...N (collectively referred to as tread blocks 106). The tread blocks 106 are to make close contact with the surface of the road while rotation. The pneumatic tire 100 (referred to as tire 100) may further include a plurality of circumferentially extending grooves along the outer surface. The circumferentially extending grooves may be considered as a recess in between tread blocks 106 extending along the circumference of the tire 100. The tread blocks 106 of tire 100 may further include sipes 108-1, 2, 3, ... N (collectively referred to as sipes 108 or sipe 108) formed across the surface of the tread block. The sipe extending across the surface of the tread block may be result in a hollow channel extending laterally in the solid tread block of the tire along the width of tread block. Therefore, the sipes may be considered as the grooves defined in tread block having a defined width. Such sipes are formed by using a process called siping which cut thin slits across the surface of the tread blocks to improve traction for driving in snowy, wet or icy conditions. Siping also provides more gripping edges for the tire to appropriately grip the road in wet and snowy conditions.

Continuing with the present example, the sipe 108 includes a pair of walls (110, 112) facing each other. In an example, pair of walls (110, 112) have a periodically repeating corners and depressions extending along the lateral extension of the sipe 108. Such periodically repeating corners and depressions may also form a plurality of tapered sides (114) of variant angle extending along the lateral extension of the sipe 108. For example, such a configuration of walls forms a zig-zag looking sipe. In an example implementation, the pair of walls (110, 112) are arranged in such a manner that the corner of one wall (110) may face corresponding depression of the other wall (112) and these pair of walls (110, 112) are separated from each other by a distance to form a groove in between the walls having a certain width. In an example, not falling under the scope of the claims, instead of having corners and depressions, other structure may be formed to form the sipe 108.

FIG. 1 further depicts an enlarged view of the tread block 106, which illustrates the sipe 108 extending across the surface of the tread block 106. In an example, only one sipe 108 is shown in the FIG. 1 for tread block, however, any possible number of sipes 108 may be formed on the surface of the tread block based on the requirement of the design. The sipe 108 includes pair of walls (110, 112) having periodically repeating corners and depressions which may face each other to form a groove like structure in between them having a certain width. The periodically repeating corners and corresponding depressions form plurality of tapered sides 114 along the extension of sipe.

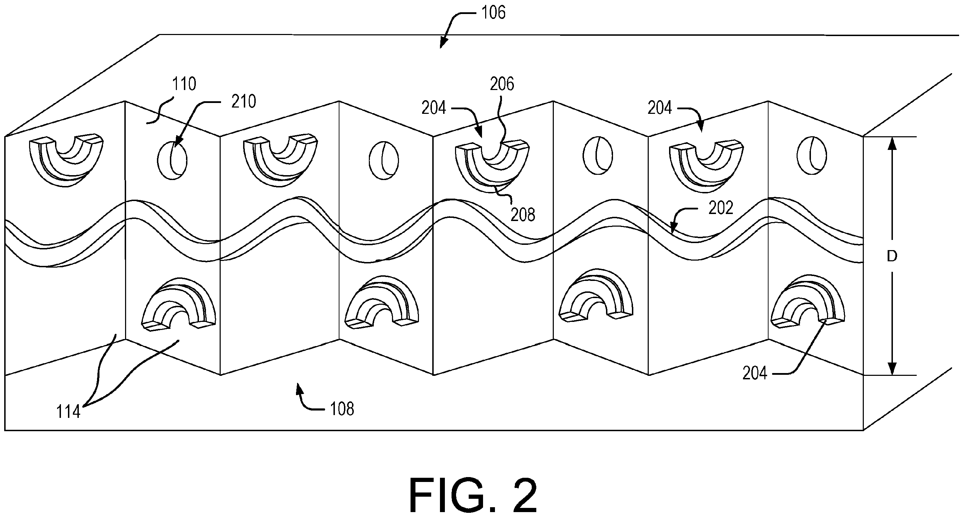

Returning to the present example, the sipe 108 may further include interlocking features, such as a sinusoidal connecting portion and a semicircular connecting portion. These and other portions of the sipe 108 may be described in detail in conjunction with FIG. 2.

Fig. 2 illustrates an enlarged view of a tread block 106 with a three-dimensional (3D) sipe 108, in accordance with an implementation of the invention as claimed. As shown in FIG. 2, the tread block 106 is 'siped' through a siping process by forming a sipe, such as sipe 108, across its surface. The sipe 108 extends along the surface of the tread block 106. Further, the sipe 108 is formed radial inward direction into the tread block 106 up to a certain depth 'D' from the top surface of the tread block 106. In an example, only one sipe 108 is shown as an example, multiple sipes 108 may be possible to increase the traction of the tread blocks 106 with the road surface. The sipe 108 includes a pair of walls, such as pair of walls (110, 112). For clarity, only wall 110 is shown and wall 112 is not shown in FIG. 2. As may be gathered from FIG. 2, the wall 110 includes periodically repeating corners and depression. For example, firstly a depression is shown, thereafter, a corner then depression and so on. The periodically repeating corners and depression extends along the length of the sipe. Further, such periodically repeating corners and depressions forms multiple tapered sides 114.

As may be understood, when the tread blocks 106 of tire 100 makes contact with road surface, they may experience a variety of loading conditions like braking, acceleration, and cornering. Such unexpected loading conditions may deform the structure of the tread blocks 106 and may decrease the tangential and lateral stiffness of the tread pattern. As a result, the tread blocks 106 lose their contact with the road surface and the vehicle slips, mainly in wed or snowy condition. The sipe 108 further includes a sinusoidal connecting portion 202 extending laterally along the length of the pair of walls (110, 112). The sinusoidal connecting portion 202 is such that it may make close contact with both walls (110, 112) and decreases deformation of tread blocks 106. For depicting the 3D structure in 2D figures, the sinusoidal connecting portion 202 is shown as making contact only with wall 110. However, it makes close contact with both walls (110, 112). Such sinusoidal connecting portion 202 take care of the tangential stiffness of the tread pattern and improves tangential forces handling capacity.

The swipe 108 may further include a plurality of semicircular shaped connecting portions 204. The semicircular connecting portions 204 are positioned periodically above and below the sinusoidal connecting portion 202 on adjacent tapered sides 114 of the pair of walls (110, 112). In an example configuration, the semicircular connecting portions 204 include an open end 206 and a closed end 208. In one example, the semicircular connecting portions 204 positioned on adjacent tapered sides 114 are oppositely oriented, i.e., one has open end 206 facing above and other has open end 206 facing down. The semicircular connecting portion 204 increases the lateral stiffness of the tread pattern and improves lateral force handling capacity. In an example, both connecting portions, i.e., sinusoidal connecting portion 202 and semicircular connecting portion 204 makes a close contact with both walls (110, 112) by extending through the width of the sipe 108.

In another implementation, the sinusoidal and semicircular connecting portions (202, 204) are protruded or extended perpendicularly from one of the walls and the other wall include corresponding depression shapes to accommodate these protrusions. For example, wall 110 include protruded sinusoidal and semicircular connecting portions (202, 204) and these are accommodated in corresponding depressions formed on another wall 112 facing the wall 110.

In one example, not falling under the scope of the claims, the tapered sides 114 of the sipe 108 may further include a through hole 210 above the sinusoidal connecting portion 202. The through hole 210 improves air passing capability in heating conditions. For example, these through holes 210 also reduces the heat and its effects on tires by allowing it cool when the air passes between these sipes 108.

Returning to the present example, the proposed configuration of the sipe 108 results in an increase in the tangential and lateral stiffness of the tread pattern to avoid deformation of tires in loading conditions. Further, such structure of connecting portions does not interrupt the water flow from the sipe during wet conditions, as it improves wet traction of the tread pattern of tire. As may be understood, in conventional approaches, to improve stiffness of the tread pattern, other parameters like tread width, block size, groove orientation, groove size are changed, but these changes negatively impact the performance of the tire. However, the structure of sipe 108 as disclosed in invention as claimed provide improved stiffness and wet traction of the tire without changing any other parameters and improve other values of other tire performance as well. The comparison of the conventional sipe with the claimed sipe structure configuration based on the tire performance parameter is listed in the below table 1.

**Table 1**

| **S. No** | **Measured Parameter** | **Conventional 2D Sipe Design** | **3D Sipe** |
|---|---|---|---|
| 1 | Tangential Stiffness (Kxx) | 100 | 110 |
| 2 | Lateral Stiffness (Kyy) | 100 | 108 |
| 3 | Max force Tangential (Fx) | 100 | 106 |
| 4 | Max force lateral (Fx) | 100 | 115 |
| 5 | Max. principal Stress | 100 | 95 |
| 6 | Max. principal Strain | 100 | 92 |

Table 1 provides comparison of conventional 2D sipe with the claimed 3D sipe based on the tire performance parameters, such as tangential stiffness, lateral stiffness, maximum tangential force, maximum lateral force, maximum principal stress and maximum principal strain. For example, as mentioned in table 2, in comparison to tangential stiffness offered by conventional 2D sipe design, e.g., 100, the corresponding value of the tangential stiffness offered by proposed 3D sipe design is 110, i.e., clear increase of 10% in tangential stiffness, this is achieved due to the presence of the sinusoidal connecting portion 202. Further, in comparison to the lateral stiffness offered by 2D sipe design, e.g., 100, the corresponding value for the proposed 3D sipe is 108, i.e., clear increase of 8% in lateral stiffness, this is achieved due to the presence of the semicircular connecting portions 204. Furthermore, as compared to 2D sipe design which may handle 100 max. tangential force, the 3D sipe proposed in the invention as claimed may handle 106 max. tangential force, i.e., 6% increase in tangential force handling capability which may eventually improves the breaking performance of the tire, i.e., breaking distance is reduced.

Further, as compared to 2D sipe design which may handle 100 max. lateral force, the 3D sipe proposed in the invention as claimed may handle 115 max. lateral force, i.e., 15% increase in lateral force handling capability which may eventually improves the cornering performance of the tire. Further, the maximum principle stress and strain experienced by the tire is also reduced by 5% and 8%, respectively. It may be noted that the values used in above table are exemplary and may change based on the condition and environment in which the vehicle is running.

Thus, based on various experimental results and data obtained from the tires, the 3D sipe with connecting portions provides improved wet performance and stiffness of the tire in loading conditions. Additionally, an improvement in tangential stiffness and lateral stiffness may result in decreased stress and strain experienced by the tire 100.

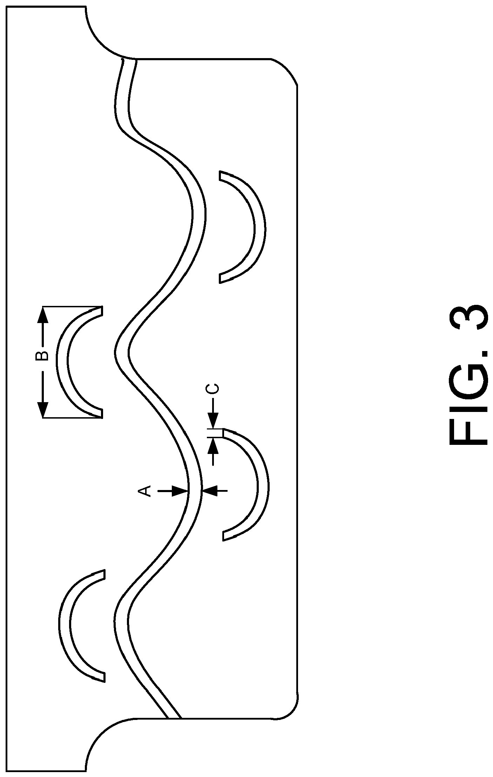

FIG. 3 illustrates exemplary 2D view of sipe 108 showing dimensions of connecting portions. As shown in FIG. 3, the sipe 108 include a sinusoidal connecting portion, such as sinusoidal connecting portion 202, and a semicircular connecting portion, such as semicircular connecting portion, 204. The thickness of the sinusoidal connecting portion 202 is depicted as 'A', diameter of semicircular connecting portions 204 is depicted as 'B' and thickness of semicircular connecting portion 204 is depicted as 'C'. The design permissible range and ranges used in present invention are depicted in below Table 2:

**Table 2**

| **Parameter** | **Design Permissible Range** | **Used in Invention** |
|---|---|---|
| A | 0.5-2.0 mm | 0.5 mm |
| B | 4-15.0 mm | 5 mm |
| C | 0.5-2.0 mm | 0.5 mm |
| Interlocking feature (invention Depth) | 0.5 ~3 mm | 0.5 mm |

Table 2 provides design permissible ranges and range used in present invention for dimensions of the connecting portions. As mentioned in Table 2, design permissible range of 'A', i.e., thickness of the sinusoidal connecting portion 202 is 0.5 to 2.00 mm and value used in present invention is 0.5 mm. Therefore, the sinusoidal connecting portion 202 utilizes minimum possible area of the sipe and allow maximum water to flow from it. Similarly, 'B', i.e., diameter of semicircular connecting portions 204 may have value in range of 4 to 15 mm. However, the value used in the present invention is 5mm. Further, the value of 'C', i.e., thickness of semicircular connecting portion 204 is 0.5 mm which is well within the design permissible range of 0.5 to 2.00mm.

Although examples for the invention as claimed have been described in language specific to structural features and/or methods, it should be understood that the appended claims are not necessarily limited to the specific features or methods described. Rather, the specific features and methods are disclosed and explained as examples of the invention as claimed.

## Claims

1. A pneumatic tire (100) having a tread block (106) protruding from an outer surface, wherein the tread block (106) comprises:
a sipe (108) formed across the surface of the tread block (106), wherein the sipe (108) comprises:
a pair of walls (110, 112) facing each other having periodically repeating corners and depressions, wherein periodic corners and depression forms tapered sides (114) of variant angle along the lateral extension of sipe (108);
a sinusoidal connecting portion (202) extending laterally along the length of the walls, wherein the sinusoidal connecting portion (202) is in close contact with both walls (110, 112) by extending through the thickness of the sipe (108);
**characterized in that** said sipe (108) further comprises:
a plurality of semicircular connecting portion (208) positioned periodically above and below the sinusoidal connecting portion (202) on adjacent tapered sides (114) of the walls.

2. The pneumatic tire (100) as claimed in claim 1, wherein the sipe (108) extends radially inward into the tread block (106) up to a certain depth (D).

3. The pneumatic tire (100) as claimed in claim 1, wherein the sinusoidal connecting portion (202) is positioned at a certain height above a bottom end of the sipe (108).

4. The pneumatic tire (100) as claimed in claim 3, wherein the sinusoidal connecting portion (202) extends perpendicularly from surface of one of the walls of the sipe (108) and contacts with the other wall.

5. The pneumatic tire (100) as claimed in claim 1, wherein the corner of one wall face corresponding depression of the other wall and the walls are separated from each other by a distance to form a groove in between the walls (110, 112).

6. The pneumatic tire (100) as claimed in claim 1, wherein the plurality of semicircular connecting portions (208) makes a close contact with both walls by extending across the thickness of the groove of the sipe (108).

7. The pneumatic tire (100) as claimed in claim 6, wherein the semicircular connecting portions (208) extends perpendicularly from surface of one of the walls of the sipe (108).

8. The pneumatic tire (100) as claimed in claim 1, wherein the semicircular connecting portions (208) comprises an open end and a closed end, wherein the adjacent tapered side (114) comprises oppositely oriented semicircular connecting portion (208) based on the type of peak of sinusoidal connecting portion (202).

9. The pneumatic tire (100) as claimed in claim 1, wherein the diameter of the semicircular protrusion is 5mm.

10. The pneumatic tire (100) as claimed in claim 1, wherein the thickness of the sinusoidal connecting portion (202) and semicircular connecting portion (208) is 0.5 mm.

## Patentansprüche

1. Pneumatischer Reifen bzw. Luftreifen (100) mit einem Laufflächen- bzw. Profilblock (106), der von einer äußeren Fläche bzw. Oberfläche vorsteht, wobei der Profilblock (106) umfasst:
eine Lamelle (108), die über die Oberfläche des Profilblocks (106) gebildet ist, wobei die Lamelle (108) umfasst:
ein Paar einander zugewandter Wände (110, 112) mit periodisch wiederkehrenden Ecken und Vertiefungen, wobei periodische Ecken und Vertiefungen verjüngte Seiten (114) unterschiedlichen Winkels entlang der lateralen Ausdehnung der Lamelle (108) bilden;
einen sinusförmigen Verbindungsabschnitt (202), der sich lateral entlang der Länge der Wände erstreckt, wobei der sinusförmige Verbindungsabschnitt (202) in engem Kontakt mit beiden Wänden (110, 112) ist, indem er sich durch die Dicke der Lamelle (108) erstreckt;
**dadurch gekennzeichnet, dass** die Lamelle (108) ferner umfasst:
eine Mehrzahl von halbkreisförmigen Verbindungsabschnitten (208), die periodisch über und unter dem sinusförmigen Verbindungsabschnitt (202) auf angrenzenden bzw. benachbarten konischen Seiten (114) der Wände positioniert sind.

2. Pneumatischer Reifen (100) nach Anspruch 1, wobei sich die Lamelle (108) radial nach innen in den Profilblock (106) bis zu einer bestimmten Tiefe (D) erstreckt.

3. Pneumatischer Reifen (100) nach Anspruch 1, wobei der sinusförmige Verbindungsabschnitt (202) in einer bestimmten Höhe über einem unteren Ende der Lamelle (108) positioniert ist.

4. Pneumatischer Reifen (100) nach Anspruch 3, wobei sich der sinusförmige Verbindungsabschnitt (202) senkrecht von der Oberfläche einer der Wände der Lamelle (108) erstreckt und die andere Wand kontaktiert bzw. berührt.

5. Pneumatischer Reifen (100) nach Anspruch 1, wobei die Ecke einer Wand der entsprechenden Vertiefung der anderen Wand zugewandt ist und die Wände durch einen Abstand voneinander getrennt sind, um eine Rille zwischen den Wänden (110, 112) zu bilden.

6. Pneumatischer Reifen (100) nach Anspruch 1, wobei die Mehrzahl von halbkreisförmigen Verbindungsabschnitten (208) einen engen Kontakt mit beiden Wänden eingeht, indem sie sich über die Dicke der Rille der Lamelle (108) erstrecken.

7. Pneumatischer Reifen (100) nach Anspruch 6, wobei sich die halbkreisförmigen Verbindungsabschnitte (208) senkrecht von der Oberfläche einer der Wände der Lamelle (108) erstrecken.

8. Pneumatischer Reifen (100) nach Anspruch 1, wobei die halbkreisförmigen Verbindungsabschnitte (208) ein offenes und ein geschlossenes Ende umfassen, wobei die benachbarte verjüngte Seite (114) einen entgegengesetzt ausgerichteten halbkreisförmigen Verbindungsabschnitt (208) umfasst, und zwar basierend auf der Art der Spitze des sinusförmigen Verbindungsabschnitts (202).

9. Pneumatischer Reifen (100) nach Anspruch 1, wobei der Durchmesser des halbkreisförmigen Vorsprungs 5 mm beträgt.

10. Pneumatischer Reifen (100) nach Anspruch 1, wobei die Dicke des sinusförmigen Verbindungsabschnitts (202) und des halbkreisförmigen Verbindungsabschnitts (208) 0,5 mm beträgt.

## Revendications

1. Pneumatique (100) présentant un pavé de gomme (106) faisant saillie à partir d'une surface externe, dans lequel le pavé de gomme (106) comprend :
une lamelle (108) formée sur la surface du pavé de gomme (106), dans lequel la lamelle (108) comprend :
une paire de parois (110, 112) se faisant face présentant des coins et des creux se répétant périodiquement, dans lequel des coins et creux périodiques forment des côtés coniques (114) d'angle variable le long de l'extension latérale de la lamelle (108) ;
une partie de liaison sinusoïdale (202) s'étendant latéralement le long de la longueur des parois, dans lequel la partie de liaison sinusoïdale (202) est en contact étroit avec les deux parois (110, 112) par extension à travers l'épaisseur de la lamelle (108) ;
**caractérisé en ce que** ladite lamelle (108) comprend en outre :
une pluralité de parties de liaison semicirculaires (208) positionnées périodiquement au-dessus et au-dessous de la partie de liaison sinusoïdale (202) sur des côtés coniques (114) adjacents des parois.

2. Pneumatique (100) selon la revendication 1, dans lequel la lamelle (108) s'étend radialement vers l'intérieur dans le pavé de gomme (106) jusqu'à une certaine profondeur (D).

3. Pneumatique (100) selon la revendication 1, dans lequel la partie de liaison sinusoïdale (202) est positionnée à une certaine hauteur au-dessus d'une extrémité inférieure de la lamelle (108).

4. Pneumatique (100) selon la revendication 3, dans lequel la partie de liaison sinusoïdale (202) s'étend perpendiculairement à partir d'une surface d'une des parois de la lamelle (108) et entre en contact avec l'autre paroi.

5. Pneumatique (100) selon la revendication 1, dans lequel le coin d'une paroi fait face à un creux correspondant de l'autre paroi et les parois sont séparées l'une de l'autre d'une distance pour former une rainure entre les parois (110, 112).

6. Pneumatique (100) selon la revendication 1, dans lequel la pluralité de parties de liaison semicirculaires (208) entre en contact étroit avec les deux parois en s'étendant sur l'épaisseur de la rainure de la lamelle (108).

7. Pneumatique (100) selon la revendication 6, dans lequel les parties de liaison semicirculaires (208) s'étendent perpendiculairement à partir d'une surface d'une des parois de la lamelle (108).

8. Pneumatique (100) selon la revendication 1, dans lequel les parties de liaison semicirculaires (208) comprennent une extrémité ouverte et une extrémité fermée, dans lequel le côté conique (114) adjacent comprend une partie de liaison semicirculaire orientée à l'opposé (208) basée sur le type de pic de partie de liaison sinusoïdale (202).

9. Pneumatique (100) selon la revendication 1, dans lequel le diamètre de la saillie semicirculaire est de 5 mm.

10. Pneumatique (100) selon la revendication 1, dans lequel l'épaisseur de la partie de liaison sinusoïdale (202) et de la partie de liaison semicirculaire (208) est de 0,5 mm.
